# FASCICULE DE BREVET EUROPEEN

(11) **EP 3 867 549 B1**
(45) Date de publication et mention de la délivrance du brevet: **06.11.2024**
(21) Numéro de dépôt: 19773475.9
(22) Date de dépôt: 27.09.2019
(51) Int. Cl.: F16H 61/32

(54) **AGENCEMENT POUR LA COMMANDE INTERNE DE SÉLECTION D'UNE BOÎTE DE VITESSES**
ANORDNUNG ZUR INTERNEN AUSWAHLSTEUERUNG EINES GETRIEBES
ARRANGEMENT FOR THE INTERNAL SELECTION CONTROL OF A GEARBOX

(30) Priorité: 15.10.2018 FR 1859532
(43) Date de publication de la demande: 25.08.2021
(73) Titulaire: Renault s.a.s, 92100 Boulogne Billancourt (FR); NISSAN MOTOR CO., LTD., Yokohama-shi, Kanagawa 221-0023 (JP)
(72) Inventeur: TERRASSE, Didier, 78360 MONTESSON (FR); MOREIRA, Michel, 94400 Vitry-sur-Seine (FR)
(74) Mandataire: Renault Group
(86) Numéro de dépôt international: PCT/EP2019/076312
(87) Numéro de publication internationale: WO 2020/078695

(56) Documents cités:
- DE-A1- 10 316 434
- DE-A1- 10 316 434
- DE-A1- 102006 054 900
- DE-A1- 102006 054 900
- DE-T1- 19 980 838
- DE-T1- 19 980 838
- FR-A1- 3 026 809
- FR-A1- 3 044 063
- FR-A1- 3 044 063
- US-A- 5 743 143
- US-A- 5 743 143

## Description

### DOMAINE TECHNIQUE DE L'INVENTION

L'invention concerne un agencement pour la commande interne de la sélection de lignes de rapports dans une boîte de vitesses.

L'invention concerne plus particulièrement un agencement comportant un actionneur commandé qui peut appliquer un effort de commande pour provoquer une sélection entre au moins une première ligne et une deuxième ligne de rapports.

### ARRIERE PLAN TECHNIQUE DE L'INVENTION

Dans ce type d'agencement ou de dispositif de commande, il est prévu un organe de commande de sélection qui est monté rotatif, dans les deux sens, entre au moins une première et une deuxième position angulaire de sélection dont chacune est associée à une première ligne de sélection et à une deuxième ligne de sélection respectivement.

L'organe de commande, ou un composant lié à celui-ci, est monté coulissant axialement dans les deux sens, lorsque l'organe de commande occupe l'une ou l'autre des première ou deuxième positions angulaires de sélection pour, par exemple sous l'action d'un actionneur commandé, provoquer le passage de l'un ou l'autre des rapports associés à la ligne de sélection préalablement sélectionnée.

Selon une conception connue qui est illustrée notamment dans les documents FR-A1-3.026.808 et FR-A1-3.044.063 (qui montre les caractéristiques de la préambule de la revendication 1) il est aussi prévu un moyen de rappel élastique de l'organe de commande vers sa première position angulaire de sélection et un actionneur commandé qui est par exemple un vérin électromagnétique ou électrique à simple effet qui peut appliquer un effort de commande à l'arbre de commande pour provoquer sa rotation depuis sa première position angulaire de sélection vers sa deuxième position, à l'encontre de l'effort de rappel exercé par le moyen de rappel élastique.

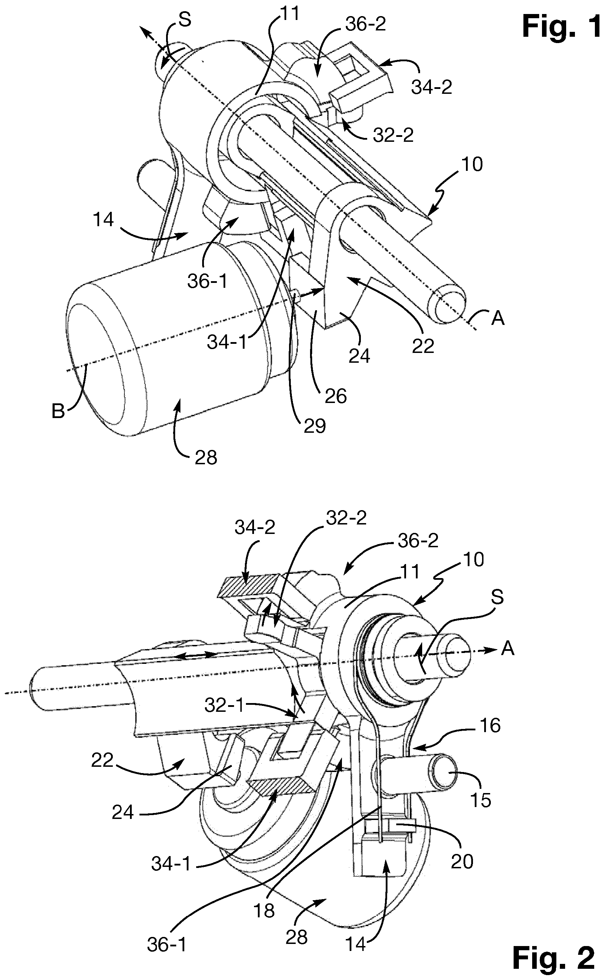

Dans une telle conception, qui sera explicitée plus en détail par la suite en référence aux figures 1 à 4, lorsque la deuxième ligne de sélection a été sélectionnée par commande de l'actionneur, à l'encontre de l'effort élastique de rappel, et que l'effort appliqué par l'actionneur a été relâché, il existe des frottements entre des éléments liés à l'organe de commande et des organes fixes par rapport à celui-ci sous la charge appliquée par l'effort élastique de rappel - qui sont susceptibles de provoquer des phénomènes de blocage axiaux, voire d'empêcher le retour vers la position neutre avec sélection à nouveau de la première ligne de rapports.

L'effort d'actionnement exercé par le vérin ou solénoïde est de valeur peu élevée et il est alors impossible à la clef d'inter-verrouillage de « rentrer » les crabots.

De la même manière, en vue de sélectionner la deuxième ligne de sélection en partant de la première ligne de sélection, des phénomènes de frottements peuvent aboutir à des blocages que la valeur insuffisante de l'effort d'actionnement exercé par le vérin ou solénoïde ne permet pas de surmonter.

Le dimensionnement du solénoïde avec son faible effort d'actionnement induit aussi un dimensionnement du ressort de rappel dont la valeur de l'effort de rappel qu'il exerce est peu élevée.

L'invention a pour but de proposer un nouvel agencement comportant une nouvelle conception des moyens d'actionnement et de rappel visant à remédier aux inconvénients mentionnés ci-dessus.

### BREF RESUME DE L'INVENTION

Dans ce but, l'invention propose agencement pour la commande interne de la sélection de lignes de rapports dans une boîte de vitesses qui comporte :
- un organe de commande de sélection qui est monté rotatif, dans les deux sens, entre au moins une première position angulaire et une deuxième position angulaire de sélection dont chacune est associée à une première ligne de sélection et à une deuxième ligne de sélection respectivement ;
- un actionneur commandé qui peut appliquer un effort d'actionnement à l'organe de commande pour provoquer sa rotation dans un premier sens, depuis sa première position angulaire de sélection vers sa deuxième position angulaire de sélection ; et
- un moyen de rappel en rotation, dans l'autre sens, de l'organe de commande vers sa première position angulaire de sélection ;
   caractérisé en ce que l'actionneur commandé comporte un moteur électrique d'entraînement et un ensemble vis-écrou qui comporte :
   - une vis d'entraînement qui est entraînée en rotation par le moteur d'entraînement ; et
   - un écrou d'entraînement qui est monté vissé sur la vis d'entraînement, qui est guidé en coulissement axial, et qui applique un effort d'actionnement à l'organe de commande pour provoquer sa rotation dans le premier sens

en ce que l'écrou d'entraînement (38) comportant une portion active qui est conformée en une tige d'actionnement (29) d'orientation axiale dont l'extrémité libre (51) coopère avec l'organe de commande (10, 22), en ce que l'écrou d'entraînement (38) comporte une extrémité distale borgne (48) qui se prolonge par sa portion active conformée en tige d'actionnement (50), et une extrémité proximale dans laquelle débouche un alésage taraudé (44) dans lequel est vissée la vis d'entraînement (42)
et en ce que l'extrémité distale borgne de l'écrou d'entraînement (38) comporte au moins un perçage débouchant (58) qui communique avec ledit alésage taraudé (44).

Selon d'autres caractéristiques de l'invention :
- le moteur électrique d'entraînement est un moteur rotatif, et la vis d'entraînement est un tronçon fileté d'un arbre de sortie du moteur d'entraînement ;
- pour son entraînement en rotation dans le premier sens, l'organe de commande comporte une patte radiale d'actionnement qui comporte une portion d'actionnement qui s'étend dans un plan parallèle à l'axe de rotation de l'organe de commande, et avec laquelle coopère l'écrou d'entraînement ;
- l'agencement comporte une pièce formant support sur laquelle est fixé un corps du moteur d'entraînement et qui comporte des moyens de guidage en coulissement axial de l'écrou d'entraînement ;
- le moyen de rappel en rotation, dans l'autre sens, de l'organe de commande vers sa première position angulaire de sélection est un moyen de rappel élastique.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective d'un agencement de commande de sélection selon un exemple de l'état de la technique dans laquelle l'organe de commande est dans sa première position de sélection ;
- la figure 2 est une vue de l'agencement de la figure 1 selon un autre angle de vue ;
- la figure 3 est une vue analogue à celle de la figure 1 sur laquelle l'agencement de la figure 1 est représenté après que l'organe de commande ait pivoté angulairement vers sa deuxième position angulaire de sélection ;
- la figure 4 est une vue de l'agencement de la figure 3 selon l'angle de vue de la figure 2 ;
- la figure 5 est une vue en perspective analogue à celle de la figure 2 qui illustre un exemple de réalisation d'un agencement de commande de sélection selon l'invention ;
- la figure 6 est une vue en perspective de l'agencement illustré à la figure 5, selon un autre angle de vue ;
- les figure 7 et 8 sont des vues de détail illustrant la coopération des bras ou doigts de passage avec les crabots associés ;
- la figure 9 est une vue en coupe selon la ligne 9-9 de la figure 10 ;
- la figure 10 est une vue de dessus de l'agencement illustré à la figure 6 ;
- la figure 11 est une vue partielle de détail selon la flèche F11 de la figure 12 ; et
- la figure 12 est une vue de détail à plus grande échelle de la portion d'extrémité distale de l'ensemble vis-écrou illustré à la figure 9.

### DESCRIPTION DETAILLEE DES FIGURES

Dans la suite de la description, des éléments présentant une structure identique ou des fonctions analogues seront désignés par des mêmes références.

A la figure 1, on a représenté un agencement interne de commande appartenant à une boîte de vitesses mécanique qui, de manière connue, comporte essentiellement un organe 10 de commande qui est monté mobile axialement dans les deux sens le long d'un axe géométrique longitudinal A (Orienté axialement d'arrière en avant), et qui est aussi monté rotatif, ou pivotant, dans les deux sens autour de ce même axe A.

La première position angulaire, dite première position de sélection, et illustrée notamment aux figures 1 et 2, est déterminée par une patte 14 d'orientation radiale appartenant à l'organe de commande 10 qui coopère avec des éléments fixes de butée angulaire appartenant par exemple au carter de la boîte.

Selon cette conception de l'état de la technique, l'organe de commande 10 est rappelé élastiquement vers sa première position par un moyen élastique de rappel 16 qui est ici réalisé sous la forme d'un ressort à fil dont la branche 18 est entraînée par un doigt 20 de la patte 14 lorsque l'organe de commande 10 est entraîné en rotation dans le sens S indiqué aux figures 1 et 2.

Pour son entraînement en rotation dans le sens S, à l'encontre de l'effort de rappel qui lui est ici appliqué par le ressort 16, l'organe de commande 10 comporte une patte radiale d'actionnement 22 qui comporte une plaque d'actionnement 24 qui s'étend dans un plan parallèle à l'axe A.

Pour agir sur la face 26 d'actionnement de la plaque d'actionnement 24, il est prévu un actionneur commandé 28 qui est par exemple un vérin électromagnétique à solénoïde à simple effet dont la tige de sortie 29, ou tige d'actionnement, est montée coulissante selon un axe géométrique B qui est globalement orthogonal au plan de la face d'actionnement 26 et qui s'étend dans un plan radial orthogonal à l'axe A.

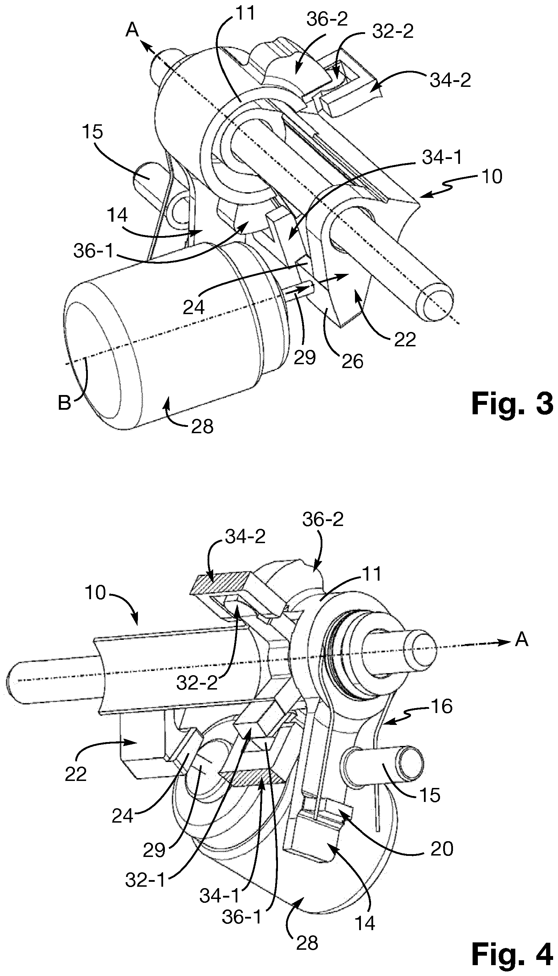

Lorsque l'actionneur 28 est commandé et alimenté en courant, la tige d'actionnement 29 se déplace selon l'axe B pour pousser sur la plaque d'actionnement 24 et provoquer la rotation, 10 dans le sens S, de l'organe de commande 10 vers sa deuxième position angulaire de sélection illustrée notamment aux figures 3 et 4, à l'encontre de l'effort élastique de rappel exercé par le ressort 16.

Lorsque l'on interrompt la commande et l'alimentation de l'alimentation électrique de l'actionneur 28, la tige d'actionnement 29 n'exerce plus d'effort et l'organe de commande 10 est rappelé élastiquement sous charge, par le ressort de rappel 16, vers sa première position angulaire illustrée aux figures 1 et 2.

Pour permettre le passage de différents rapports, dans l'une ou l'autre des deux lignes de sélection préalablement sélectionnée, il est prévu deux bras, ou doigts, radiaux de passage 32-1 et 32-2 qui tournent dans les deux sens et se déplacent axialement avec l'organe de commande 10.

Dans la première position de sélection, c'est le premier bras radial de passage 32-1 qui est reçu dans un crabot 34-1 qui, de manière connue, est relié à une première ligne de pignons de la boîte de vitesses.

Dans cette première position angulaire de sélection, le deuxième bras de passage 32-2 est dégagé hors d'un deuxième crabot associé 34-2 qui, de manière connue, est lui-même relié à une deuxième ligne de pignons de la boîte.

Comme on peut le voir aux figures 3 et 4 lorsque, sous l'action de l'actionneur 28, l'organe de commande 10 a pivoté angulairement depuis sa première position angulaire de sélection vers sa deuxième position angulaire de sélection, le premier bras de passage 32-1 est dégagé circonférentiellement, ou angulairement, hors du premier crabot 34-1 tandis que, à son tour, le deuxième bras de passage 32-2 est engagé dans le deuxième crabot 34-2.

Enfin, l'agencement comporte un composant 11 appelé clef d'inter-verrouillage qui est monté tournant avec l'organe de commande 10 et qui comporte deux blocs 36-1 et 36-2 de verrouillage dont chacun coopère alternativement avec son crabot 34-1, 34-2 associé pour le bloquer lorsque la ligne de sélection correspondante n'est pas sélectionnée.

En partant de la deuxième position angulaire de sélection illustrée aux figures 3 et 4, il est possible de déplacer axialement l'organe de commande 10 dans les deux sens de manière à provoquer des actions de passage, ou engagement, de rapports.

Dès qu'un engagement a été provoqué dans l'un ou l'autre sens axial, on peut relâcher l'effort de sélection appliqué par l'actionneur 28 sur l'organe 10. Il en résulte que le premier bras de passage 32-1 est alors en appui circonférentiel contre des portions de surface en vis-à-vis du premier crabot 34-1, et ceci sous charge du ressort de rappel 16.

Les déplacements axiaux de l'organe de commande 10 sont ainsi freinés, voire bloqués, par ces efforts de frottement générés entre les surfaces en contact du premier crabot 34-1 avec la portion en vis-à-vis d'une face du premier bras de passage 32-1.

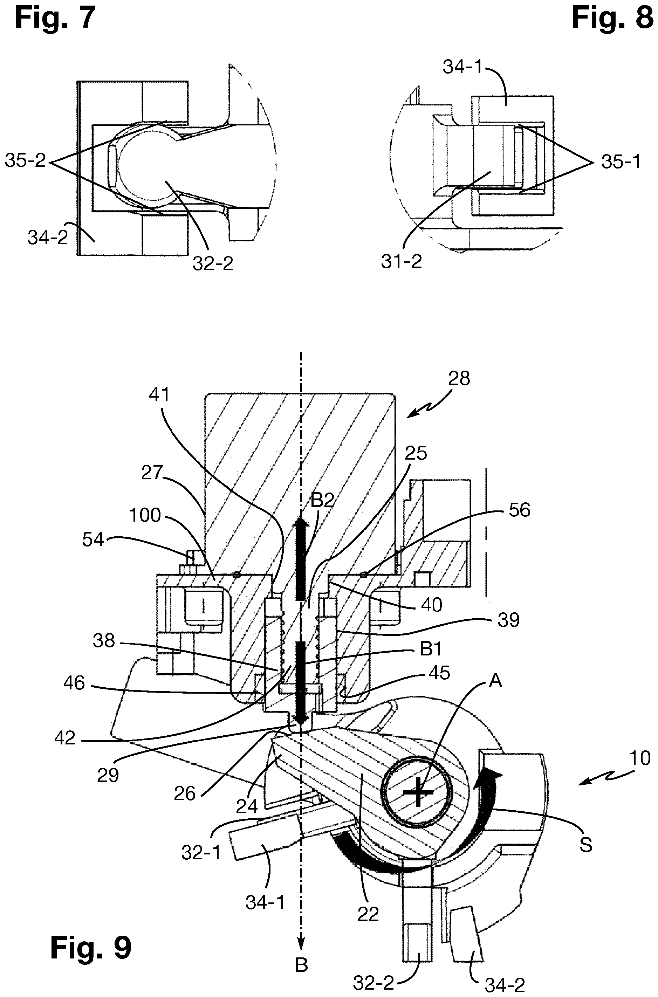

On décrira maintenant la conception selon l'invention illustrée aux figures 9 à 12 et suivantes et selon laquelle l'actionneur commandé comporte un moteur électrique rotatif d'entrainement 28 et un ensemble vis-écrou d'entraînement.

L'actionneur commandé comporte ainsi un organe de sortie (constitué par un écrou d'entraînement 38) à déplacement axial selon l'axe ou direction B d'actionnement qui est apte à être entraîné en déplacement axial au moins dans le sens B1 (indiqué à la figure 9) pour appliquer à l'organe de commande 10 un effort d'actionnement pour provoquer sa rotation dans le premier sens S, l'organe de commande 10 étant rappelé élastiquement vers sa première position par un moyen de rappel indépendant de l'actionneur commandé, tel que par exemple par un ressort de rappel 16.

Pour son montage et sa fixation sur une pièce 100 appartenant à, ou étant porté par, un élément fixe de carter de la boîte de vitesses ou d'un embrayage associé, le corps 27 du moteur électrique 28 est muni d'une platine radiale 52 qui s'étend dans un plan orthogonal à l'axe de rotation du rotor du moteur électrique 28.

Outre la platine 52, la monture du corps 27 comporte ici trois vis de fixation 54 et un joint d'étanchéité 56.

Le corps 27 du moteur électrique 28 comporte aussi un nez 40 de centrage qui est reçu dans un alésage complémentaire proximal 41 de la pièce 100 qui appartient à un alésage étagé à trois tronçons.

En position montée et après fixation, l'axe B de rotation du rotor et de l'arbre de sortie 25 du moteur électrique 28 s'étend selon l'axe B qui est globalement orthogonal au plan de la face d'actionnement 26 et qui s'étend dans un plan radial orthogonal à l'axe A.

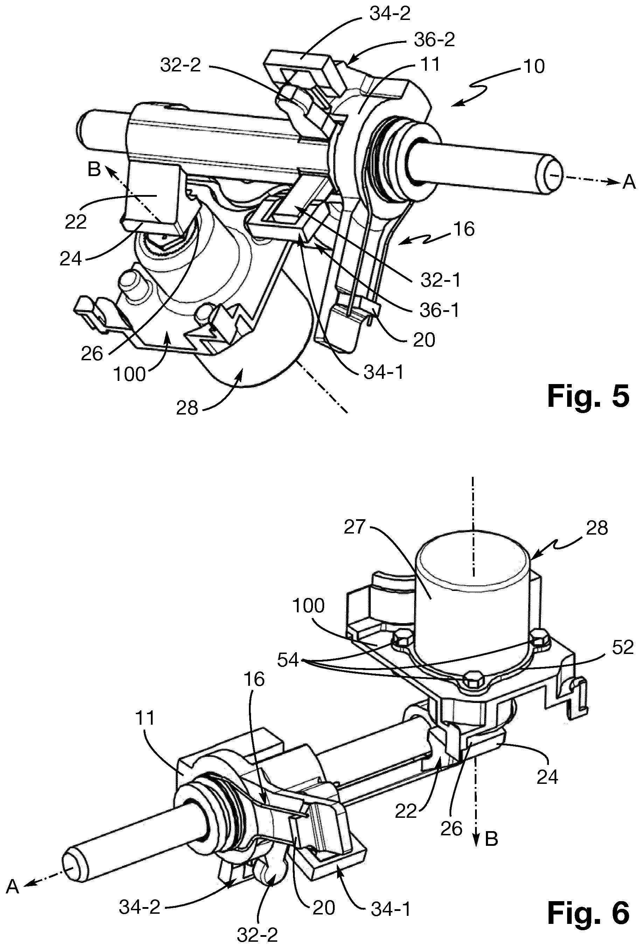

Selon le mode de réalisation de l'invention illustré aux figures 5-12, la vis d'entraînement 42 associée à l'écrou d'entraînement 38 est constituée par un tronçon fileté d'extrémité libre distale de l'arbre rotatif de sortie 25 du moteur électrique d'entraînement 28.

La vis d'entraînement 42 est montée vissée dans le taraudage interne 44 de l'écrou d'entraînement 38.

L'écrou d'entraînement 38 est ici un écrou dont la surface externe 39 est cylindrique à contour hexagonal.

L'écrou d'entraînement 38 est reçu en coulissement axial dans un alésage intermédiaire de plus grand diamètre 43 de l'alésage étagé de la pièce 100 qui est débouchant axialement à son extrémité distale opposée au moteur électrique d'entraînement 28.

A son extrémité libre distale, l'alésage étagé de la pièce 100 comporte un alésage distal de plus grand diamètre 45.

Afin d'immobiliser l'écrou d'entraînement 38 en rotation autour de l'axe B, dans les deux sens, par rapport à la pièce 100 et donc par rapport à la vis d'entraînement 42, il est prévu une bague anti-rotation 46 qui est logée dans l'alésage distal 45 par rapport auquel elle est immobilisée en rotation.

Intérieurement, la bague anti-rotation 46 comporte un trou cylindrique axial 47 de contour hexagonal complémentaire de celui de la surface externe 39 de l'écrou d'entraînement 38, de manière à immobiliser ce dernier en rotation, et en étant dimensionné de manière telle que l'écrou d'entraînement 38 puisse coulisser axialement librement à travers la bague anti-rotation 46.

Ainsi, selon la conception de principe d'un ensemble vis-écrou, il constitue un mécanisme d'entraînement en translation composé de la tige filetée 42 formant vis, et de l'écrou d'entraînement 38.

La tige filetée 42 est entraînée en rotation autour de l'axe fixe B par rapport à la pièce 100, et l'écrou d'entraînement 38 est guidé en translation par rapport à la pièce 100.

Lorsque l'on entraîne la vis d'entrainement 42 en rotation dans l'un ou l'autre sens, au moyen du moteur électrique commandé 28, on fait tourner la vis d'entraînement 42 pour entraîner l'écrou d'entraînement 38 en translation axiale selon l'axe B dans l'un ou l'autre sens B1 ou B2.

Pour agir sur la patte d'entraînement 22, l'écrou d'entraînement 38 comporte une portion active qui est conformée en une tige d'actionnement d'orientation axiale dont l'extrémité libre coopère avec la patte d'actionnement 22 liée en rotation à l'organe de commande 10.

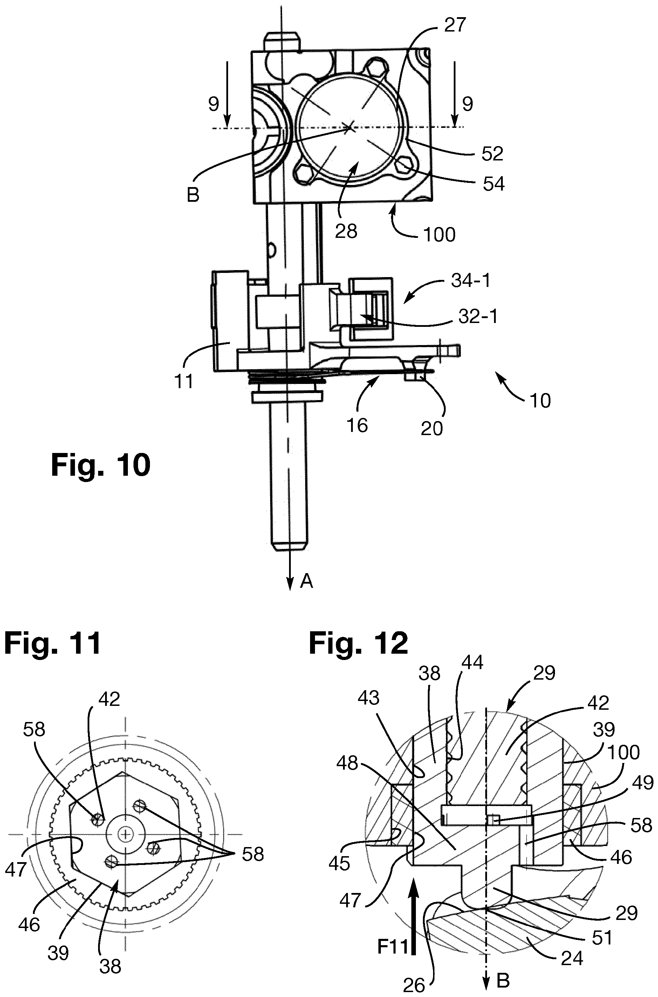

A cet effet, l'écrou d'entrainement 38 comporte une extrémité distale borgne constituée par une paroi radiale 48 qui obture l'alésage interne taraudé 44 à son extrémité distale, inférieure en considérant les figures 9 et 12.

Au-delà de la paroi transversale 48, l'écrou d'entraînement 38 se prolonge par une portion active conformée en une tige d'actionnement 29 dont l'extrémité libre coopère avec la face d'entraînement 26 de la plaque 24 de la patte d'entraînement 22.

La face interne de la paroi transversale 48 comporte un doigt de butée 49 qui détermine la position angulaire maximale de vissage de la vis d'entraînement 42 dans l'écrou d'entraînement 38, notamment afin d'éviter des phénomènes de « collage » en fin de course de vissage.

La paroi transversale 48 formant l'extrémité distale borgne de l'écrou d'entrainement 38 comporte ici quatre perçages axiaux débouchant 58 qui communiquent avec l'alésage taraudé 44 afin de permettre si nécessaire une lubrification de l'intérieur de l'écrou d'entraînement 38 et / ou une circulation d'air entre ce dernier et l'extérieur.

Le changement de ligne de sélection au moyen de l'actionneur commandé selon l'invention s'effectue de la manière suivante.

En partant de la position illustrée à la figure 9 - qui correspond à la première position angulaire de sélection - l'actionneur commandé provoque le déplacement de la tige d'actionnement 29 dans le sens B1 pour provoquer une rotation dans le sens antihoraire de l'organe de commande 10 autour de son axe A, en considérant la figure 9.

A cet effet, le moteur électrique d'entraînement 28 entraîne la vis 42 en rotation dans un premier sens de rotation, ce qui provoque un déplacement axial dans un premier sens de l'écrou d'entraînement 38 - verticalement du haut vers le bas en considérant la figure 9 - selon la flèche B1.

En fin de cette course d'actionnement, l'organe de commande 10 est dans sa deuxième position angulaire de sélection correspondant à la position illustrée en référence aux figures 3 et 4.

Lors de ce changement de ligne de sélection, dans l'hypothèse où le bras de passage 32-2 entre en contact avec les chanfreins d'entrée 35-2 du crabot associé 34-2 (Voir figure 7), le couple fourni par le moteur électrique 28 et donc l'effort axial exercé par la tige d'actionnement 29, est suffisant pour déplacer la fourchette et permettre l'entrée du bras de passage dans le crabot.

Pour ramener ou rappeler l'organe de commande 10 vers sa première position angulaire de sélection, c'est le ressort de rappel - ou ressort de sélection - 16 qui permet au bras de passage 32-1 de déplacer le crabot associé 34-1 avec l'aide de chanfreins 35-1 (Voir figure 8).

L'action du ressort de rappel 16, provoque le déplacement de la tige d'actionnement 29 dans le sens B2 et la rotation dans le sens horaire de l'organe de commande 10 autour de son axe A, en considérant la figure 9.

Selon une variante, lors du rappel de l'organe de commande 10 vers sa première position angulaire de sélection par le ressort de rappel 16, il est possible de commander la rotation de l'arbre de sortie 25 dans l'autre sens pour provoquer un « retour » de l'écrou d'entraînement 38 et de la tige d'actionnement 29 selon la flèche B2.

La solution qui vient d'être décrite et qui est illustrée aux figures 9 et suivantes peut être mise en œuvre dans le même encombrement que celle selon l'état de la technique qui est illustrée aux figures 1 à 4.

Dans cet encombrement, le dimensionnement du moteur électrique d'entraînement est suffisant pour disposer d'un couple important permettant de remédier aux inconvénients des solutions selon l'état de la technique et en étant associé à un ressort de rappel dont le tarage est lui aussi plus important.

L'invention n'est toutefois pas limitée à ce mode de réalisation, mais seulement limitée par les revendications attachées.

## Revendications

1. Agencement pour la commande interne de la sélection de lignes de rapports dans une boîte de vitesses qui comporte :
- un organe de commande de sélection (10, 22) qui est monté rotatif, dans les deux sens, entre au moins une première position angulaire et une deuxième position angulaire de sélection dont chacune est associée à une première ligne de sélection et à une deuxième ligne de sélection respectivement ;
- un actionneur commandé qui peut appliquer un effort d'actionnement à l'organe de commande (10, 22) pour provoquer sa rotation dans un premier sens (S), depuis sa première position angulaire de sélection vers sa deuxième position angulaire de sélection ; et
- un moyen (16) de rappel élastique en rotation, dans l'autre sens, de l'organe de commande (10, 22) vers sa première position angulaire de sélection, le moyen (16) de rappel étant indépendant de l'actionneur de commande ;
**caractérisé en ce que** l'actionneur commandé comporte un moteur électrique d'entraînement (28) et un ensemble vis-écrou qui comporte :
- une vis d'entraînement (42) qui est entraînée en rotation par le moteur d'entraînement (28) ; et
- un écrou d'entraînement (38) qui est monté vissé sur la vis d'entraînement (42), qui est guidé en coulissement axial, et qui applique un effort d'actionnement à l'organe de commande (10, 22) pour provoquer sa rotation dans le premier sens (S),
**en ce que** l'écrou d'entraînement (38) comportant une portion active qui est conformée en une tige d'actionnement (29) d'orientation axiale dont l'extrémité libre (51) coopère avec l'organe de commande (10, 22), **en ce que** l'écrou d'entrainement (38) comporte une extrémité distale borgne (48) qui se prolonge par sa portion active conformée en tige d'actionnement (50), et une extrémité proximale dans laquelle débouche un alésage taraudé (44) dans lequel est vissée la vis d'entraînement (42) et **en ce que** l'extrémité distale borgne de l'écrou d'entrainement (38) comporte au moins un perçage débouchant (58) qui communique avec ledit alésage taraudé (44)..

2. Agencement selon la revendication 1, **caractérisé en ce que** le moteur électrique d'entraînement (28) est un moteur rotatif, et **en ce que** la vis d'entraînement (42) est un tronçon fileté d'un arbre de sortie (25) du moteur d'entraînement (28).

3. Agencement selon la revendication 1, **caractérisé en ce que**, pour son entraînement en rotation dans le premier sens (S), l'organe de commande (10, 22) comporte une patte radiale d'actionnement (22) qui comporte une portion d'actionnement (24) qui s'étend dans un plan parallèle à l'axe (A) de rotation de l'organe de commande (10), et avec laquelle coopère l'écrou d'entraînement.

4. Agencement selon la revendication 1, **caractérisé en ce qu'**il comporte une pièce formant support (100) sur laquelle est fixé un corps (27) du moteur d'entraînement (28) et qui comporte des moyens (46) de guidage en coulissement axial de l'écrou d'entraînement (38).

5. Agencement selon la revendication 1, **caractérisé en ce que** le moyen de rappel en rotation, dans l'autre sens, de l'organe de commande (10) vers sa première position angulaire de sélection est un moyen de rappel élastique (16).

## Patentansprüche

1. Anordnung für die interne Steuerung der Auswahl von Ganglinien in einem Getriebe, die umfasst:
- ein Auswahlsteuerelement (10, 22), das in beiden Richtungen zwischen mindestens einer ersten Auswahlwinkelposition und einer zweiten -winkelposition drehbar montiert ist, von denen jede einer ersten Auswahllinie beziehungsweise einer zweiten Auswahllinie zugeordnet ist;
- einen gesteuerten Aktuator, der eine Betätigungskraft auf das Steuerelement (10, 22) zum Bewirken von dessen Drehung in einer ersten Richtung (S) von seiner ersten Auswahlwinkelposition in Richtung seiner zweiten Auswahlwinkelposition ausüben kann; und
- ein Mittel (16) für eine elastische Rückstellung bei Drehung des Steuerelements (10, 22) in die andere Richtung, in Richtung seiner ersten Winkelauswahlposition, wobei das Rückstellmittel (16) unabhängig von dem Stellantrieb ist;
**dadurch gekennzeichnet, dass** der gesteuerte Aktuator einen elektrischen Antriebsmotor (28) und eine Schrauben-Mutter-Anordnung umfasst, die umfasst:
- eine Antriebsschraube (42), die durch die Antriebsmotor (28) drehend angetrieben wird; und
- eine Antriebsmutter (38), die auf der axial verschiebbar geführten Antriebsschraube (42) aufgeschraubt ist und die eine Betätigungskraft auf das Steuerelement (10, 22) zum Bewirken dessen Drehung in der ersten Richtung (S) ausübt,
**dass** die Antriebsmutter (38) einen aktiven Abschnitt umfasst, der an eine Betätigungsstange (29) mit axialer Ausrichtung angepasst ist, deren freies Ende (51) mit dem Steuerelement (10, 22) zusammenwirkt, **dass** die Antriebsmutter (38) ein blindes distales Ende (48), das durch ihren aktiven Abschnitt, der an die Betätigungsstange (50) angepasst ist, verlängert wird, und ein proximales Ende umfasst, in das eine Gewindebohrung (44) mündet, in die die Antriebsschraube (42) eingeschraubt wird, und **dass** das blinde distale Ende der Antriebsmutter (38) mindestens ein Durchgangsloch (58) umfasst, das mit der Gewindebohrung (44) in Verbindung steht.

2. Anordnung nach Anspruch 1, **dadurch gekennzeichnet, dass** der elektrische Antriebsmotor (28) ein Rotationsmotor ist, und **dass** die Antriebsschraube (42) ein Gewindeabschnitt einer Abtriebswelle (25) des Antriebsmotors (28) ist.

3. Anordnung nach Anspruch 1, **dadurch gekennzeichnet, dass** das Steuerelement (10, 22) für seinen Drehantrieb in der ersten Richtung (S) eine radiale Betätigungslasche (22) umfasst, die einen Betätigungsabschnitt (24) umfasst, der sich in einer Ebene parallel zu der Drehachse (A) des Steuerelements (10) erstreckt, und mit dem die Antriebsmutter zusammenwirkt.

4. Anordnung nach Anspruch 1, **dadurch gekennzeichnet, dass** sie einen Trägerteil (100), an dem ein Körper (27) des Antriebsmotors (28) befestigt ist und der Mittel (46) zur Führung bei axialer Verschiebung der Antriebsmutter (38) umfasst.

5. Anordnung nach Anspruch 1, **dadurch gekennzeichnet, dass** das Mittel für die Rückstellung bei Drehung des Steuerelements (10) in die andere Richtung, in Richtung seiner ersten Winkelauswahlposition, ein elastisches Rückstellmittel (16) ist.

## Claims

1. Arrangement for internally controlling the selection of gear lines in a gearbox, which comprises:
- a selection control member (10, 22) which is mounted so as to be rotatable in both directions between at least a first angular selection position and a second angular selection position, each of which is associated with a first selection line and a second selection line respectively;
- a controlled actuator which can apply an actuating force to the control member (10, 22) in order to cause it to rotate in a first direction (S) from its first angular selection position to its second angular selection position; and
- a means (16) for rotatably resiliently returning, in the opposite direction, the control member (10, 22) to its first angular selection position, the return means (16) being independent of the control actuator;
**characterized in that** the controlled actuator comprises an electric drive motor (28) and a screw-nut assembly which comprises:
- a drive screw (42) which is rotated by the drive motor (28); and
- a drive nut (38) which is screwed onto the drive screw (42), is axially slidably guided and applies an actuating force to the control member (10, 22) in order to cause it to rotate in the first direction (S),
**in that** the drive nut (38) comprises an active portion which is designed as an axially oriented actuating rod (29), the free end (51) of which cooperates with the control member (10, 22),**in that** the drive nut (38) comprises a blind distal end (48) which is extended by the active portion thereof designed as an actuating rod (50), and a proximal end into which a tapped bore (44) opens in which the drive screw (42) is screwed and **in that** the blind distal end of the drive nut (38) comprises at least one through-hole (58) which communicates with said tapped bore (44).

2. Arrangement according to claim 1, **characterized in that** the electric drive motor (28) is a rotary motor, and **in that** the drive screw (42) is a threaded section of an output shaft (25) of the drive motor (28).

3. Arrangement according to claim 1, **characterized in that,** for its rotation in the first direction (S), the control member (10, 22) comprises a radial actuating lug (22) which has an actuating portion (24) that extends in a plane parallel to the axis (A) of rotation of the control member (10), and with which the drive nut cooperates.

4. Arrangement according to claim 1, **characterized in that** it comprises a support part (100) to which a body (27) of the drive motor (28) is fixed and which comprises means (46) for axially slidably guiding the drive nut (38).

5. Arrangement according to claim 1, **characterized in that** the means for rotatably returning, in the opposite direction, the control member (10) to its first angular selection position is a resilient return means (16).
